# EUROPEAN PATENT SPECIFICATION

(11) **EP 0 625 649 B1**
(45) Date of publication and mention of the grant of the patent: **15.04.1998**
(21) Application number: 94303346.4
(22) Date of filing: 10.05.1994
(51) Int. Cl.: F16F 15/00, F16F 15/06, F16F 15/02, B60N 2/52, B66F 9/075

(54) **Vibration proofing structure**
Vibrationsdämpfende Struktur
Structure amortissant les vibrations

(30) Priority: 14.05.1993 JP 147122/93; 06.05.1994 JP 127957/94
(43) Date of publication of application: 23.11.1994
(60) Divisional application: 97202788.2
(73) Proprietor: Ikeda, Kiyoko, Shinagawa-ku, Tokyo (JP)
(72) Inventor: Ikeda, Masahiko, Kamakura-shi, Kanagawa-ken (JP)
(74) Representative: Wombwell, Francis

(56) References cited:
- FR-A- 1 362 687
- US-A- 2 312 718
- US-A- 2 760 552
- US-A- 3 625 466
- PATENT ABSTRACTS OF JAPAN vol. 15, no. 354 (M-1155) (4882) 6 September 1991 & JP-A-03 140 651 (MASAHIKO IKEDA) 14 June 1991
- PATENT ABSTRACTS OF JAPAN vol. 10, no. 29 (M-451) (2086) 5 February 1986 & JP-A-60 184 736 (SANWA TETSUKI K.K.)

## Description

This invention relates to a vibration proofing structrue,and more particularly to a vibration proofing sturcture suitable for use for various applications including a seat for a vehicle or the like, a construction, an internal combustion engine,a rotary machine,a machine tool,a precision instrument,a measuring instrument and the like.

Conventionally,a vibration proofing structure which is constructed so as to incorporate a spring therein has been principally used for a driver's seat of each of a car and a truck,a seat provided in a driver's cab of each of a train and a construction machine and the like. Also,a vibration proofing mechanism or structure having a vibration proof rubber, an oil damper or the like incorporated therein has been used for a construction such as a general construction,nuclear facilities, a tank,plant facilities or the like. Further,a vibration proofing structure in which a spring,a vibration proof rubber, an oil damper or the like is incorporated has been used for an internal combustion engine,a rotary machine,a machine tool,a precision instrument, a measuring instrument or the like.

Unfortunately, such conventional vibration proofing structures as described above each fail to exhibit a satisfactory vibration proofing function. In view of the above,the inventor developed a vibration proofing mechanism or structure which is capable of effectively absorbing vibration,as disclosed in Japanese Patent Application Laid-Open Publication No. 140651/1991 (Japanese Patent No 2,676,559) showing the prior art according to the preamble of claim 1. The vibration proofing structure disclosed is constructed in such a manner that a base and an oil damper including a cylinder in which a piston and a rod connected to each other are connected to cacti other through a guide mechanism for guiding the base and oil damper so as to permit both to be linearly reciprocated relative to each other. Also, the vibration proofing structure includes a mounting bar which is mounted at one end thereof on the rod in a manner to extend perpendicularly to the rod and projected at the other end thereof from the cylinder.

The vibration proofing structure disclosed in Japanese Patent Application Laid-Open Publication No. 140651/1991 which is constructed as described above is substantially increased in vibration proofing function as compared with the above-described conventional structures and exhibits satisfactory applicability to various technical fields. Nevertheless, the vibration proofing structure disclosed is disadvantageous in that it is often required to change a configuration thereof depending on technical fields to which it is applied.

### SUMMARY OF THE INVENTION

The present invention has been made in view of the foregoing disadvantage of the prior art.

Accordingly, it is an object of the present invention to provide a vibration proofing structure which is capable of being effectively applicable to a variety of fields while exhibiting satisfactory vibration proofing performance.

It is another object of the present invention to provide a vibration proofing structure which is capable of exhibiting satisfactory vibration proofing performance against vibration in a horizontal direction.

In accordance with the present invention, a vibration proofing structure is provided defined by claim 1.

In a preferred embodiment of the present invention, each of the first and second bases is formed into a plate-like shape. Alternatively, they may be formed into any other suitable shape so long as they are satisfactorily connected to an object.

The first and second oil dampers may be arranged in a manner to be superposed on each other. Alternatively, they may be horizontally juxtaposed to each other.

In a preferred embodiment of the present invention, the vibration proofing structure further comprises an intermediate plate fixed on the second oil damper so as to be arranged between the first oil damper and the second oil damper which are connected to each other so as to rotate relative to each other. The intermediate plate is provided with a bearing in which the second end of the first rod of the first oil damper is rotatably supported. The structure further comprises supports each mounted on the first base so as to extend therefrom and positioned on each of both sides of the first oil damper so as to be spaced at a small interval therefrom, and rod members each mounted on each of the supports so as to inwardly extend therefrom in a direction parallel to a direction of sliding of the pistons, to thereby connect the intermediate plate and each of the supports to each other therethrough in a non-fixed manner.

### BRIEF DESCRIPTION OF THE DRAWINGS

These and other objects and many of the attendant advantages of the present invention will be readily appreciated as the same becomes better understood by reference to the following detailed description when considered in connection with the accompanying drawings, wherein:
Fig. 1 is a vertical sectional view showing an embodiment of a vibration proofing structure according to the present invention;
Fig. 2 is an exploded perspective view of the vibration proofing structure shown in Fig. 1;
Fig. 3 is a perspective view of the vibration proofing structure shown in Fig. 1;
Fig. 4 is a perspective view showing a manner of use of the vibration proofing structure of Fig. 1;
Fig. 5 is a vertical sectional view showing an example of a vertical-type oil damper used for a construction or the like;
Fig. 6 is a vertical sectional view showing an example of a strut used for a construction or the like;
Fig. 7 is a vertical sectional view showing another example of a vertical-type oil damper used for a construction or the like.

### DETAILED DESCRIPTION OF THE PREFERRED EMBODIMENTS

Now,a vibration proofing structure according to the present invention will be described hereinafter with reference to the accompanying drawings.

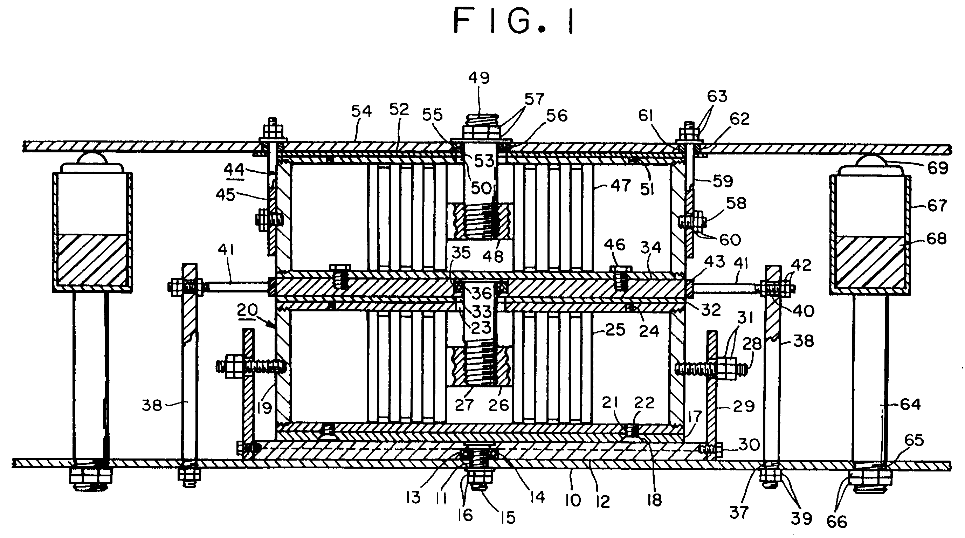

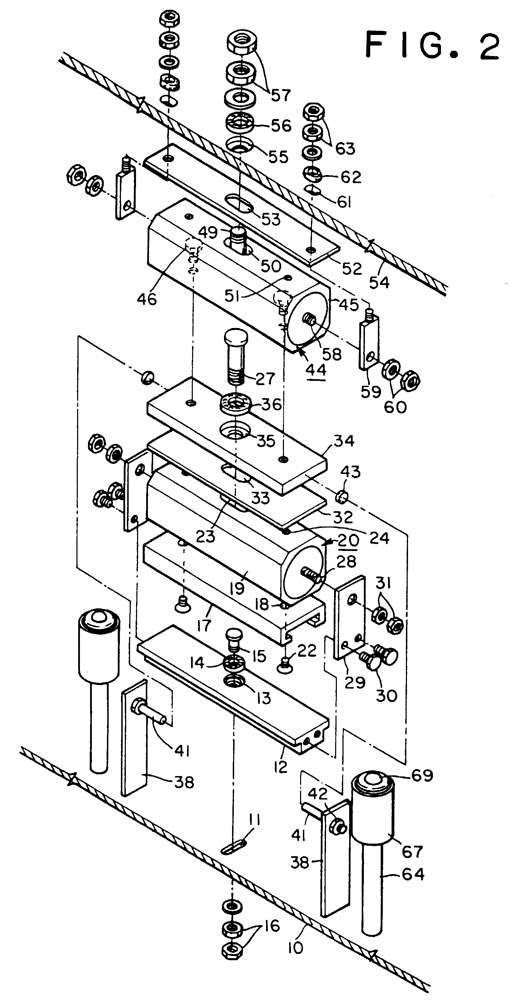

Referring first to Figs. 1 to 3, an embodiment of a vibration proofing structure according to the present invention is illustrated, A vibration proofing structure of the illustrated embodiment includes a first or lower base 10,which is formed with a slot-like through-hole 11. The vibration proofing structure also includes an elongated rail 12 provided separate from the base 10 and formed into a T-like shape in section. The rail 12 is formed at a central portion thereof with a vertically extending aperture 13. The aperture 13 is formed at a lower portion thereof with a circular depression (not shown), in which a bearing 14 is fitted. Reference numeral 15 designates a bolt which is downwardly inserted through the aperture 13 and of which a lower portion is inserted into the through-hole 11 of the first or lower base 10. Then,the bolt 15 is threadedly fitted on a lower end thereof with a double nut 16,resulting in the rail 12 being mounted on the base 6 so that a longitudinal axis thereof may be rendered perpendicular to that of the through-hole 11 of the lower base 10. The bolt 15 is formed into a diameter smaller than a size of the through-hole 11 in a lateral direction thereof, so that it may be reciprocated in a longitudinal direction of the through-hole 15 therein. Also, such construction and arrangement permit the rail 12 to be rotated about the bearing 14 in a horizontal direction.

The vibration proofing mechanism or structure of the illustrated embodiment also includes an elongated guide 17 which is formed of a plate-like material into a substantially T-shape in section of which an opening is defined at a bottom thereof, resulting in permitting the rail 12 to be fittedly received in the guide 17 through the opening. The guide 17 is provided at each of portions of a top thereof spaced from each other in a longitudinal direction thereof with a bolt hole 18.

The vibration proofing structure of the illustrated embodiment further includes a tank 19 for a first or lower oil damper 20, which tank is formed into a shape like a rectangular cylinder and arranged so that a longitudinal axis thereof extends in the same direction as that of the guide 17. The tank 19, as shown in Fig. 1, is formed at a bottom thereof with bolt holes 21 in a manner to positionally correspond to the bolt holes 18 of the guide 17, so that bolts 22 are inserted into the bolt holes 18 and 21, resulting in the tank 19 being securely mounted on the guide 17. The tank 19 of the lower oil damper 20 is formed at a central portion of a top thereof with a slot-like aperture 23 of which a longitudinal axis extends in a longitudinal direction of the tank 19, as well as at each of portions of the top thereof spaced from each other in the longitudinal direction of the tank 19 with a small aperture 24, through which oil is fed to each of chambers defined on both sides in an interior of the tank 19. After the tank 19 is thus fed with oil, the apertures 24 each are closed with a screw. The tank 19 of the lower oil damper 20, as shown in Fig. 1, is provided therein with a pair of pistons 25, which are arranged in a row in the longitudinal direction of the tank 19 and connected to each other through a connection bar 26 interposedly arranged therebetween. The connection bar 26 is threadedly mounted at a central portion thereof with a rod 27 in a manner to upwardly extend therefrom and then project through the aperture 23 from the tank 19. The tank 19 includes end plates mounted on both ends thereof, each of which is threadedly mounted thereon with a bolt 28 in a manner to horizontally outwardly extend therefrom. Reference numeral 29 designates a support of which a lower end is supportedly mounted on each of both ends of the rail 12 defined in the longitudinal direction thereof by means of bolts 30. The supports 29 each may be formed into a plate-like shape and are formed at an upper portion thereof with a hole, through which the bolt 28 is inserted. Then, the bolt 28 is threadedly mounted on a distal end thereof with a double nut 31. The tank 19 is securely mounted on the top thereof with a closing plate 32 to completely close the small apertures 24. The closing plate 32 is formed at a central portion thereof with an elongated slot-like aperture 33 of the same configuration as the slot-like aperture 23 in a manner to be positionally aligned with the aperture 23.

The closing plate 32 mounted on the tank 19 of the lower oil damper is covered with an intermediate plate 34 formed into substantially the same configuration as the closing plate 32. The intermediate plate 34 is formed at a central portion thereof with an aperture 35, in which a bearing 36 is fitted, to thereby rotatably support an upper end of the rod 27 therein. The lower base 10 is formed at a portion thereof positioned outside each of the supports 29 with an aperture 37, through which a support 38 is vertically inserted at a lower end thereof. The supports 38 may be formed into a plate-like shape. Then, the supports 38 each are fixed at the lower end thereof to the lower base 10 by means of a double nut 39. The supports 38 each are formed at an upper portion thereof with an aperture 40 extending in a thickness direction thereof or in a horizontal direction, through which a rod 41 is inserted at one end or a proximal end thereof. Then, the rod 41 is mounted in the hole 40 by means of a pair of nuts 42 arranged in a manner to interpose the support 38 therebetween. The rod 41 is mounted on the other end or a distal end thereof with a pad 43 made of a rubber material, by virtue of which the rod 41 is abutted at the distal end thereof against an end surface of each of the intermediate plates 34.

In addition, the vibration proofing mechanism or structure of the illustrated embodiment includes a second or upper oil damper 44, which is constructed in substantially the same manner as the first or lower oil damper 20 described above and mounted on the intermediate plate 34. The upper oil damper 44 includes a tank 45 which is integrally joined at a bottom to the intermediate plate 34 by means of bolts 46. The tank 45, as shown in Fig. 1, is provided therein with a pair of pistons 47, which are arranged in a row in a longitudinal direction of the tank 45 and connected to each other through a connection bar 48 interposedly arranged therebetween. The connection bar 48 is threadedly mounted at a central portion thereof with a rod 49 in such a manner so as to upwardly extend therefrom and then upwardly outwardly project from the tank 45 through a slot-like aperture 50 formed at a top of the tank 45. The top of the tank 45 is formed at each of portions thereof spaced from each other in a longitudinal direction of the tank 45 with a small aperture 51, which is closed with a screw. The tank 45 of the second oil damper 44 is securely mounted on the top thereof with a closing plate 52. The closing plate 52 is formed at a central portion thereof with a slot-like aperture 53 so as to be aligned with the aperture 50 of the tank 45 and is provided thereon with a second or upper base 54. The second or upper base 54 is formed with an aperture 55 so as to be aligned with the aperture 50 of the tank 45 and the aperture 53 of the closing plate 52, so that the rod 49 is projected from an interior of the tank 45 through the apertures 50, 53 and 55 to an exterior of the vibration proofing structure. The aperture 55 of the second or upper base 54 is fitted therein with a bearing 56 through which the rod 49 is supportedly inserted and then a double nut 57 is threadedly fitted on an upper end of the rod 49. The tank 45 of the upper oil damper 44 includes a pair of end plates to each of which a bolt 58 is threadedly connected at one end thereof. Reference numeral 59 designate a support which may be formed into a plate-like shape and is arranged on each of both sides of the tank 45 of the upper oil damper 44. The supports 59 each are formed at a lower portion thereof with a through-hole via which the bolt 58 is inserted. Then, the bolt 58 is threadedly fitted on the other end thereof with a double nut 60, so that the support 59 is vertically mounted on each of both sides of the tank 45 so as to upwardly extend therefrom. Also, the supports 59 each are arranged so as to be projected at an upper portion thereof from an aperture 61 formed through the upper base 54. The apertures 61 each are sealed with a rubber material 62 and the supports 59 each are threadedly fitted on an upper end thereof with a double nut 63, to thereby be securely joined to the upper base 54.

In the vibration proofing structure of the illustrated embodiment constructed as described above, a space of a predetermined interval is defined between the lower base 10 and the upper base 54 as shown in Fig. 1. The vibration proofing structure thus constructed is provided on both sides thereof with a pair of struts 64 for bearing a load downwardly applied to the upper base 54. More particularly, the struts 64 each are vertically mounted on the lower base 10 by inserting a lower portion of the strut 64 through an aperture 65 formed via the lower base 10 and threadedly fitting a double nut 66 on a lower end of the strut 64. The strut 64 is provided at an upper portion thereof with a cylinder 67 in which a rubber member 68 is fitted. Then, a suitable spring member (not shown) such as a leaf spring or the like is received in the cylinder 67 in a manner to be arranged on the rubber member 68, followed by mounting a hemispherical member 69 on a top of the cylinder 67. The hemispherical member 69 is kept contacted with a lower surface of the second or upper base 54.

Now, the manner of operation of the vibration proofing structure shown in Figs. 1 to 3 will be described hereinafter.

Application of vibration to, for example, the lower base 10 is to cause the tank 19 of the lower oil damper 20 mounted on the lower base 10 to be vibrated. Even when the tank 19 of the lower oil damper 20 is vibrated, oil in the tank 19 of the lower oil damper 20 absorbs the vibration to prevent it from being transmitted to the rod 27. Nevertheless, the oil fails to fully prevent transmission of the vibration to the rod 27. A portion of the vibration which is thus slightly transmitted to the rod 27 causes the tank 45 of the upper oil damper 44 to be vibrated.

At this time, the rods 41 of the supports 38 act to push back the vibration transmitted to the upper oil damper 44 in an opposition direction, to thereby substantially reduce momentum of kinetic inertia energy caused by the instantaneous impact by a car which is running. Vibration of the tank 45 of the upper oil damper 44 is effectively absorbed by oil in the tank 45 of the damper 44, to thereby be prevented from being transmitted to the rod 49. Thus, vibration applied to the lower base 10 is substantially prevented from being transmitted to the upper base 54 to which the rod 49 is connected. Likewise, vibration applied to the upper base 54 is absorbed in the same manner as the above, resulting in being substantially prevented from being transmitted to the lower base 10.

Vibration in an oblique direction is applied to the vibration proofing structure depending on a place at which the structure is used and conditions under which it is used. The vibration proofing structure, as described above, is constructed so that the oil dampers 20 and 44 rotate relative to each other and relative to the upper and lower bases 10 and 54. Thus, application of oblique vibration to the vibration proofing structure causes relative rotation between the oil dampers and/or between the oil dampers and the bases, so that application of torsion to the structure may be effectively prevented, to thereby eliminate damage to the structure and an adverse effect on a vibration proofing function of the structure.

In use, it is required to adjust a position of each of the lower and upper oil dampers 20 and 44. Now, an operation of the adjustment will be described hereinafter. First, the nut 31, 42 and 60 by which the supports 29, 38 and 59 are respectively fastened are loosened. Then, any one of the nuts 31 is tightened to permit the guide 17 and tank 19 to be moved along the rail 12 in the longitudinal direction of the vibration proofing structure, resulting in aligning the bolt 15 for fixing the rail 12 and a center of the tank 19 with each other. Then, the nuts 31 are firmly tightened while keeping both aligned with each other, to thereby stationarily hold the tank 19 and the like. Then, the rod 27, the piston 25 and the like are moved in the longitudinal direction of the structure through the intermediate plate while tightening the nut 42 of one of the supports 38, to thereby position the rod 27 at the center of the tank 19, followed by tightening the nuts 47 to fix the rod 27 at the center of the tank 19. Concurrently, the upper tank 45 is automatically fixed at a predetermined position. Thereafter, the upper base 54 is moved in the longitudinal direction of the structure to position the rod 49 at the center of the tank 45 of the upper oil damper 44 and then the nuts 63 are tightened to fix the upper base 54 with respect to the tank 45.

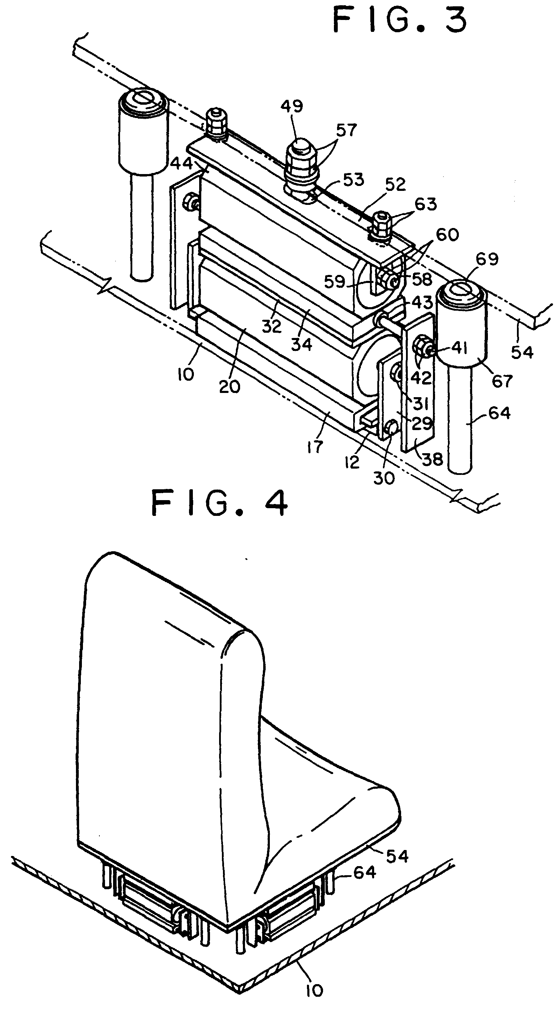

The vibration proofing structure of the illustrated embodiment constructed as described above may be widely applied to a variety of fields such as a construction, various kinds of machines and the like. Now, application of the vibration proofing structure of the illustrated embodiment to a seat for a car, a construction equipment or the like will be described hereinafter with reference to Fig. 4.

In Fig. 4, four such vibration proofing structures are arranged in the form of a rectangular configuration between the lower base 10 and the upper base 54. A weight of the upper base 54 and load applied to the upper base 54 are substantially borne by the struts 64 and vibration in the vertical direction is absorbed by an elastic cushioning material such as the rubber member 68 of each of the struts 64.

An application of vibration in the lateral direction of the lower base 10 to the base 10 will be described. When vibration in the lateral direction of the lower base 10 is applied to the lower base 10, first two vibration proofing structures arranged in juxtaposition to each other in the longitudinal direction of the base 10 perpendicular to the lateral direction thereof each are operated in such a manner that the lower base 10, rail 12 and tank 19 are to be moved in the lateral direction while leaving the rod 27, connection bar 26 and piston 25 of the lower oil damper 20. However, oil received in the space defined outside each of the pistons 25 in the tank 29 acts to absorb the vibration to prevent it from being transmitted to the rod 27. Nevertheless, a portion of the vibration which fails to be absorbed by the oil is transmitted through the rod 27 and intermediate plate 34 to the upper oil damper 44. Then, the vibration is absorbed by oil received in the space defined outside each of the pistons 47 in the tank 45 of the upper oil damper 44, resulting in being substantially prevented from being transmitted through the rod 49 to the upper base 54.

The above-descried vibration in the lateral direction constitutes vibration in the longitudinal direction with respect to second two vibration proofing structures arranged perpendicular to arrangement of the above-described first two vibration proofing structures juxtaposed to each other in the longitudinal direction. However, the vibration is substantially absorbed by the first two vibration proofing structures as described above, to thereby be minimized. Thus, the second two vibration proofing structures each are so operated that only the lower base 10 is moved by a slight distance in the lateral direction without moving the components of the structure except the base 10 while keeping the bolt 15 fitted in the through-hole 11 of the base 10, to thereby prevent the minimized vibration from being transmitted to the upper base 54.

The vibration proofing function of the structure carried out when vibration in the longitudinal direction of the lower base 10 is applied thereto will be readily understood from the vibration proofing function described above in connection with application of vibration in the lateral direction.

Application of vibration to the lower base 10 is carried out in the lateral and longitudinal directions of the base 10, as well as in oblique directions thereof. When vibration in any oblique direction is applied to the lower base 10, components of the vibration are transmitted to the first two vibration proofing structures and second two ones. The first and second vibration proofing structures each function to absorb the components in such a manner as described above, respectively, to thereby substantially prevent the vibration from being transmitted to the upper base 54.

As will be noted from the foregoing, the vibration proofing structure of the illustrated embodiment is so constructed that the rail 12, guide 17 and lower tank 19 are integrally rotatable with respect to the lower base 10. Also, the upper tank 45 and intermediate plate 34 are rotatable with respect to the rail 12, guide 17 and lower tank 19. Further, the upper tank 45 is rotatable with respect to the upper base 54. Such construction of the vibration proofing structure, when vibration of a large magnitude is obliquely applied to the lower substrate 10, permits upper and lower sections of the structure to rotate relative to each other at three rotatable positions described above, to thereby prevent torsion from being applied to the vibration proofing structure. Thus, the vibration proofing structure of the embodiment ensures safety in operation and effectively exhibits a satisfactory vibration proofing function.

Results of a test made on the seat shown in Fig. 4 for measuring vibration proofing performance of the vibration proofing structure of the illustrated embodiment are shown in Table 1. The test was carried out using three inspection units and in such a manner that an inspection needle of each of the units is abutted at a tip end thereof against each of the lower base 10, intermediate plate 34 and upper base 54. In the test, a degree of transmission of impact force applied to the lower substrate 10 to each of the inspection units was measured. Numerical values indicated in Table 1 are round.

**Table 1**

| Impact Force Applied to Lower Base 10 (kg) | Impact Force Transmitted to Intermediate Plate 34 (kg) | Impact Force Transmitted to Upper Base 54 (g) |
|---|---|---|
| 100 | 80 | 800 |
| 250 | 100 | 80 |
| 300 | 120 | 80 |
| 450 | 150 | 90 |

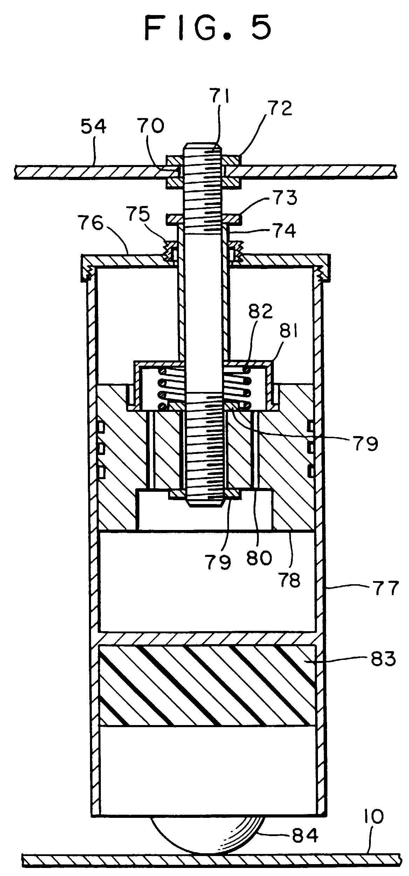

Referring now to Fig. 5, a vertical-type oil damper which may be incorporated between the lower base 10 and the upper base 54 is illustrated. The upper base 54 is formed with an aperture 70, through which a rod 71 is upwardly inserted. Then, upper and lower nuts 72 are threadedly fitted on the rod 71 so as to interpose the upper base 54 therebetween, resulting in the rod 71 being fixed to the upper base 54. Also, the rod 71 is threadedly fitted thereon with a adjustment nut 73 at a position below the lower nut 72. Further, the rod 71 is snugly fitted on a portion thereof positioned under the adjustment nut 73 with a pipe 74. The pipe 74 is fitted thereon with a cap-like ring 75, which is then threadedly fitted in a disc-like lid 76. The lid 76 is arranged so as to cover an upper end of a cylindrical tank 77. The tank 77 is provided at a central region therein with a piston 78, which is fittedly mounted on a lower portion of the rod 71. The rod 71 is threadedly fitted thereon with upper and lower nuts 79 so as to tightly interpose the piston 78 therebetween, to thereby securely hold the piston 78 on the rod 71. The piston 78 is formed with vertically extending through-holes 80 of a small size which act as an oil passage means. Reference numeral 81 designates a bowl-like cap arranged between the pipe 74 and the piston 78 so as to cover the through-holes 80. Reference numeral 82 designates a coiled spring interposedly arranged between the cap 81 and the piston 78. Downward movement of the adjustment nut 73 to forcedly press a lower end of the cap 81 against the piston 78 through the pipe 74 prevents oil from flowing through the through-holes 80. When the adjustment nut 73 is slightly raised, a gap of a slight distance is formed between the cap 81 and the piston 78 to permit a slight amount of oil to vertically flow via the through-holes 80. The tank 77 used under such conditions is provided at a bottom thereof with a substantially hemispherical member 84 through a cushioning member 83 made of rubber or the like, so that the member 84 is abutted at a lower distal end thereof against the lower base 10.

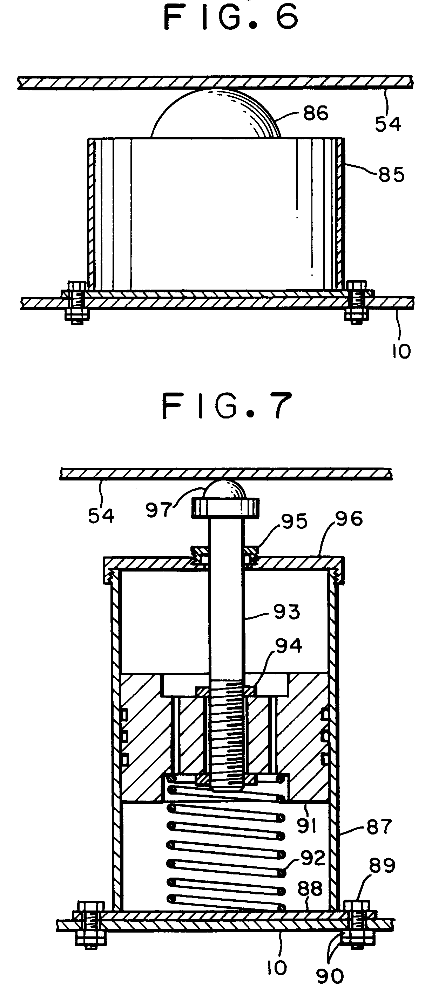

The oil damper shown in Fig. 5 may be used in combination with a strut shown in Fig. 6. The strut shown in Fig. 6 is arranged between the lower base 10 and the upper base 54 and includes a hollow cylinder 85 in which an elastic cushioning member (not shown) such as a leaf spring or the like is incorporated and a hemispherical member 86 mounted on a top of the cylinder 85. A suitable number of oil dampers shown in Fig. 5 and a suitable number of struts shown in Fig. 6 are used in combination, wherein the struts function to substantially bear a weight and the oil dampers function to substantially absorb vibration.

A vertical-type oil damper shown in Fig. 7 may be substituted for that of Fig. 5. The oil damper of Fig. 7 includes a tank 87 of which a bottom plate 88 is fixed on the lower base 10 by means of bolt-nut combinations. A piston 91 is supported on a coiled spring 92 arranged between the bottom plate 88 and the piston 91. The piston 91 is fitted on a lower portion of a rod 93 and then securely held thereon by means of upper and lower nuts 94 threadedly fitted on the rod 93 so as to interpose the piston 91 therebetween. Also, the rod 93 is arranged so as to be upwardly projected at an upper portion thereof through a center of each of a ring 95 and a lid 96 arranged for covering an upper end of the tank 87 from the tank 87. The rod 93 is mounted on an upper end thereof with a hemispherical member 97, which is abutted against a lower surface of the upper base 54.

## Claims

1. A vibration proofing structure comprising:
a first base (10);
a first oil damper (20) mounted on said first base (10);
said first oil damper (20) including a first tank (19) mounted on said first base (10), first pistons (25) arranged in said first tank (19), and a first rod (27) having a first end and a second end, said first end of said first rod (27) being mounted on said first pistons (25) so as to render an axis of said first rod (27) perpendicular to a longitudinal axis of said first pistons (25), said second end of said first rod (27) outwardly extending from said first tank;
characterised by:
a second oil damper (44) including a second tank (45), second pistons (47) arranged in said second tank (45), and a second rod (49) having a first end and a second end, said first end of said second rod (49) being mounted on said second pistons (47) so as to render an axis of said second rod (49) perpendicular to a longitudinal axis of said second pistons (47), said second end of said second rod (49) outwardly extending from said second tank (45); and
a second base (54) on which the second end of said second rod (49) is mounted;
said first and second oil dampers (20,44) being juxtaposed to each other;
said second end of said first (27) rod being connected to said second tank (45) of said second oil damper (44), and said first rod (27) of said first oil damper (20) being connected to said second tank (45) of said second oil damper (44) so as to permit said first and second oil dampers (20,44) to rotate relative to each other.

2. A vibration proofing structure as defined in Claim 1, wherein said first tank (19) of said first oil damper (20) is mounted on said first base (10) so as to permit said first oil damper (20) and first base (10) to rotate relative to each other.

3. A vibration proofing structure as defined in Claim 1 or 2, wherein said second end of said second rod (49) is mounted on said second base (54) so as to permit said second oil damper (44) and second base (54) to rotate relative to each other.

4. A vibration proofing structure as defined in Claim 1 further comprising an intermediate plate (34) fixed on said second oil damper (44) so as to be arranged between said first oil damper (20) and said second oil damper (44) which are connected to each other so as to rotate relative to each other;
said intermediate plate (34) being provided with a bearing (36) for rotatably supporting said first rod (27) of said first oil damper (20);
supports (38) each mounted on said first base (10) so as to extend therefrom and positioned on each of both sides of said first oil damper (20) so as to be spaced at a small interval therefrom; and
rod members (41) each mounted on each of said supports (38) so as to inwardly extend therefrom in a direction parallel to a direction of sliding of said pistons (25), to thereby connect said intermediate plate (34) and each of said supports (38) to each other therethrough in a non-fixed manner.

5. A vibration proofing structure as defined in any one of Claims 1-4, further comprising plural struts (64) for substantially bearing weight of said second base (54) and load downwardly applied to said second base (54),
said struts each being vertically mounted on said first base, and
a hemispherical member which is elastically supported on the top of each of said struts,
said hemispherical member being kept contacted with a lower surface of said second base.

6. A vibration proofing structure as defined in Claim 5, further comprising plural vertical-type oil dampers which are incorporated between said first base and said second base,
said vertical-type oil dampers being fixed to one of said second and first bases, and
a hemispherical member on the top of each of said vertical-type oil dampers,
said hemispherical member being kept contacted with the other one of the two bases which does not fix the vertical-type oil dampers.

## Patentansprüche

1. Schwingungsdämpfende Konstruktion mit:
- einem ersten Träger (10);
- einem ersten Öldämpfer (20), der am ersten Träger (10) angebracht ist;
- wobei der erste Öldämpfer (20) einen am ersten Träger (10) angebrachten ersten Behälter (19), in diesem ersten Behälter (19) angebrachte erste Kolben (25) und eine erste Stange (27) mit einem ersten und einem zweiten Ende aufweist, wobei das erste Ende der ersten Stange (27) so an den ersten Kolben (25) angebracht ist, dass die Achse der ersten Stange (27) rechtwinklig zur Längsachse der ersten Kolben (25) verläuft, und sich das zweite Ende der ersten Stange (27) aus dem ersten Behälter heraus nach außen erstreckt;
**gekennzeichnet durch**:
- einen zweiten Öldämpfer (44) mit einem zweiten Behälter (45), in diesem zweiten Behälter (45) angeordneten Kolben (47) und einer zweiten Stange (49) mit einem ersten Ende und einem zweiten Ende, wobei das erste Ende der zweiten Stange (49) so an den zweiten Kolben (47) angebracht ist, dass die Achse der zweiten Stange (49) rechtwinklig zur Längsachse der zweiten Kolben (47) verläuft, wobei sich das zweite Ende der zweiten Stange (49) aus dem zweiten Behälter (45) heraus nach außen erstreckt; und
- einen zweiten Träger (54), an dem das zweite Ende der zweiten Stange (49) angebracht ist;
- wobei der erste und der zweite Öldämpfer (20, 44) übereinanderliegend angeordnet sind und
- wobei das zweite Ende der ersten Stange (27) so mit dem zweiten Behälter (45) des zweiten Öldämpfers (44) verbunden ist, und die erste Stange (27) des ersten Öldämpfers (20) so mit dem zweiten Behälter (45) des zweiten Öldämpfers (44) verbunden ist, dass sich der erste und der zweite Öldämpfer (20, 44) relativ zueinander drehen können.

2. Schwingungsdämpfende Konstruktion nach Anspruch 1, bei der der erste Behälter (19) des ersten Öldämpfers (20) so am ersten Träger (10) angebracht ist, dass sich der erste Öldämpfer (20) und der erste Träger (10) relativ zueinander drehen können.

3. Schwingungsdämpfende Konstruktion nach Anspruch 1 oder 2, bei der das zweite Ende der zweiten Stange (49) so am zweiten Träger (54) angebracht ist, dass sich der zweite Öldämpfer (44) und der zweite Träger (54) relativ zueinander drehen können.

4. Schwingungsdämpfende Konstruktion nach Anspruch 1, ferner mit einer Zwischenplatte (34), die so am zweiten Öldämpfer (44) befestigt ist, dass sie zwischen dem ersten Öldämpfer (20) und dem zweiten Öldämpfer (44) angeordnet ist, die so miteinander verbunden sind, dass sie sich relativ zueinander drehen können;
- wobei die Zwischenplatte (34) mit einem Lager (36) zum drehbaren Lagern der ersten Stange (27) des ersten Öldämpfers (20) versehen ist;
- Haltern (38), die jeweils so am ersten Träger (10) angebracht sind, dass sie sich ausgehend von diesem erstrecken, wobei sie an jeder der beiden Seiten des ersten Öldämpfers (20) so positioniert sind, dass sie mit einem kleinen Abstand von diesem beabstandet sind; und
- Stabelementen (41), die jeweils an jedem der Halter (38) so angebracht sind, dass sie sich nach innen ausgehend von diesen in einer Richtung parallel zur Verschieberichtung der Kolben (25) erstrecken, um dadurch die Zwischenplatte (34) und jeden der Halter (38) durchgehend auf nicht fixierte Weise zu verbinden.

5. Schwingungsdämpfende Konstruktion nach einem der Ansprüche 1 - 4, ferner mit
- mehreren Streben (64) zum Aufnehmen von im wesentlichen dem Gewicht des zweiten Trägers (54) und einer nach unten auf den zweiten Träger (54) ausgeübten Last;
-- wobei diese Streben jeweils rechtwinklig auf dem ersten Träger angebracht sind; und
- einem halbkugeligen Element, das elastisch an der Oberseite jeder der Streben gehalten ist;
-- wobei dieses halbkugelige Element mit der Unterseite des zweiten Trägers in Kontakt gehalten ist.

6. Schwingungsdämpfende Konstruktion nach Anspruch 5, ferner mit
- mehreren Vertikal-Öldämpfern, die zwischen den ersten Träger und den zweiten Träger eingebaut sind;
-- wobei diese Vertikal-Öldämpfer am ersten oder zweiten Träger befestigt sind; und
- einem halbkugeligen Element an der Oberseite jedes der Vertikal-Öldämpfer;
-- wobei das halbkugelige Element in Kontakt mit dem anderen der zwei Träger, an dem die Vertikal-Öldämpfer nicht befestigt sind, gehalten wird.

## Revendications

1. Structure amortissant les vibrations comportant :
une première base (10) ;
un premier amortisseur à huile (20) monté sur ladite première base (10) ;
ledit premier amortisseur à huile (20) comportant un premier réservoir (19) monté sur ladite première base (10), des premiers pistons (25) agencés dans ledit premier réservoir (19), et une première tige (27) ayant une première extrémité et une seconde extrémité, ladite première extrémité de ladite première tige (27) étant montée sur lesdits premiers pistons (25) de manière à rendre un axe de ladite première tige (27) perpendiculaire à un axe longitudinal desdits premiers pistons (25), ladite seconde extrémité de ladite première tige (27) s'étendant vers l'extérieur à partir dudit premier réservoir ;
caractérisée en ce qu'elle comporte :
un second amortisseur à huile (44) comportant un second réservoir (45), des seconds pistons (47) agencés dans ledit second réservoir (45), et une seconde tige (49) ayant une première extrémité et une seconde extrémité, ladite première extrémité de ladite seconde tige (49) étant montée sur lesdits seconds pistons (47) de manière à rendre un axe de ladite seconde tige (49) perpendiculaire à un axe longitudinal desdits seconds pistons (47), ladite seconde extrémité de ladite seconde tige (49) s'étendant vers l'extérieur à partir dudit second réservoir (49) ; et
une seconde base (54) sur laquelle est montée la seconde extrémité de ladite seconde tige (49) ;
lesdits premier et second amortisseurs à huile (20, 44) étant juxtaposés l'un à l'autre ;
ladite seconde extrémité de ladite première tige (27) étant reliée audit second réservoir (45) dudit second amortisseur à huile (44), et ladite première tige (27) dudit premier amortisseur à huile (20) étant reliée audit second réservoir (45) dudit second amortisseur à huile (44) de manière à permettre auxdits premier et second amortisseurs à huile (20, 44) de tourner l'un par rapport à l'autre.

2. Structure amortissant les vibrations selon la revendication 1, dans laquelle ledit premier réservoir (19) dudit premier amortisseur à huile (20) est monté sur ladite première base (10) de manière à permettre audit premier amortisseur à huile (20) et à ladite première base (10) de tourner l'un par rapport à l'autre.

3. Structure amortissant les vibrations selon la revendication 1 ou 2, dans laquelle ladite seconde extrémité de ladite seconde tige (49) est montée sur ladite seconde base (54) de manière à permettre audit second amortisseur à huile (44) et à ladite seconde base (54) de tourner l'un par rapport à l'autre.

4. Structure amortissant les vibrations selon la revendication 1, comportant de plus une plaque intermédiaire (34) fixée sur ledit second amortisseur à huile (44) de manière à être agencée entre ledit premier amortisseur à huile (20) et ledit second amortisseur à huile (44) qui sont reliés l'un à l'autre de manière à tourner l'un par rapport à l'autre ;
ladite plaque intermédiaire (34) étant munie d'un palier (36) pour supporter de manière rotative ladite première tige (27) dudit premier amortisseur à huile (20) ;
des supports (38), chacun étant monté sur ladite première base (10) de manière à s'étendre à partir de celle-ci et positionnés sur chacun des deux côtés dudit premier amortisseur à huile (20) de manière à être espacés de ceux-ci d'un petit interstice ; et
des éléments de tige (41), chacun étant monté sur chacun desdits supports (38) de manière à s'étendre vers l'intérieur à partir de ceux-ci dans une direction parallèle à une direction de coulissement desdits pistons (25), pour relier ainsi ladite plaque intermédiaire (34) et chacun desdits supports (38) les uns aux autres par l'intermédiaire de ceux-ci d'une manière non-fixée.

5. Structure amortissant les vibrations selon l'une quelconque des revendications 1 à 4, comportant de plus plusieurs piliers (64) destinés à supporter pratiquement le poids de ladite seconde base (54) et une charge vers le bas appliquée sur ladite seconde base (54),
lesdits piliers étant chacun monté verticalement sur ladite première base, et
un élément hémisphérique qui est supporté de manière élastique sur la partie supérieure de chacun desdits piliers,
ledit élément hémisphérique étant gardé en contact avec une surface inférieure de ladite seconde base.

6. Structure amortissant les vibrations selon la revendication 5, comportant de plus plusieurs amortisseurs à huile du type vertical qui sont incorporés entre ladite première base et ladite seconde base,
lesdits amortisseurs à huile du type vertical étant fixés sur une base parmi lesdites seconde et première bases, et
un élément hémisphérique situé sur la partie supérieure de chacun desdits amortisseurs à huile du type vertical,
ledit élément hémisphérique étant gardé en contact avec l'autre base parmi les deux bases, qui ne fixe pas les amortisseurs à huile du type vertical.
